# DEMANDE DE BREVET EUROPEEN

(11) **EP 0 522 984 A1**
(43) Date de publication de la demande: **13.01.1993**
(21) Numéro de dépôt: 92420230.2
(22) Date de dépôt: 03.07.1992
(51) Int. Cl.: B62M 9/10, F16H 55/30

(54) **Pignon denté pour transmission par chaîne, en particulier pour cycles**

(30) Priorité: 09.07.1991 FR 9108997
(71) Demandeur: B.G. INNOVATION (S.A.R.L.), F-74000 Annecy (FR)
(72) Inventeur: Bouffard, Claude, F-59000 Lille (FR)
(74) Mandataire: Lejeune, Benoit

(57) **Abrégé**

Pignon denté 1 pour transmission par chaîne qui comprend une succession de dents 4 limitées radialement par un bord antérieur 7 et un bord postérieur 8 destinés à venir s'appuyer sur les rouleaux 10 correspondants de maillons 12 de la chaîne, caractérisé en ce que le bord antérieur 8 est formé par une courbure concave 8a s'étendant de part et d'autre du cercle primitif pour s'étendre vers l'extérieur au-delà de celui-ci, formant ainsi un crochet de retenue.

## Description

La présente invention est relative aux pignons dentés pour transmission par chaîne et en particulier aux pignons calés sur le moyeu arrière d'un cycle, ainsi qu'aux plateaux dentés avant, servant à la transmission, au moyen d'une chaîne à maillons, du mouvement moteur exercé par l'utilisateur sur le pédalier. Les roues, plateaux et pignons dentés actuels possèdent des dents symétriques, de forme générale triangulaire, leur donnant des extrémités fines pouvant se rompre sous des efforts élevés.

L'un des objets de l'invention est de fourni des dents résistantes pouvant être utilisées sans risque de rupture, aussi bien pour les bicyclettes de route que pour celles tout terrain, ou mieux encore pour les tandems, c'est-à-dire pour les cycles dont la transmission est soumise à des efforts très élevés, temporaires ou permanents.

Un autre inconvénient des pignons dentés actuels est consécutif à la longueur de la dent dépassant du diamètre primitif de la denture. En effet, dans les conditions actuelles, avant de s'engager à fond dans l'intervalle entre dents et d'être mis en tension, chaque maillon de la chaîne vient d'abord en contact avec l'extrémité de la dent arrière et glisse sur cette dent au fur et à mesure qu'il s'introduit dans l'intervalle entre dents, ce qui conduit à une diminution du rendement de la transmission et à un matage de la denture.

La présente invention a pour objet de remédier à cet inconvénient en fournissant un meilleur accrochage des maillons de la chaîne, afin de supprimer tout glissement provocateur d'usure et d'améliorer le rendement de la transmission.

Ainsi, selon l'invention, le pignon denté pour transmission par chaîne comprend une succession de dents limitées radialement par un bord antérieur et un bord postérieur destinés à venir s'appuyer sur les rouleaux correspondants de maillons de la chaîne, est caractérisé en ce que le bord antérieur est formé par une courbure concave s'étendant de part et d'autre du cercle primitif pour s'étendre vers l'extérieur au-delà de celui-ci, formant ainsi un cochet de retenue.

Selon une caractéristique complémentaire, la courbure concave est une portion de cercle.

Selon d'autres dispositions préférées, le centre du rayon de la courbure concave est situé sur le cercle primitif, et la valeur du rayon est égale au rayon des rouleaux des maillons de chaîne.

Dans une disposition complémentaire, le bord antérieur est formé par une courbure convexe dont la base de la dent a avantageusement une largeur de valeur supérieure à sa hauteur.

Selon une autre caractéristique complémentaire, le bord postérieur concave est relié au sommet de la dent par un chanfrein, qui peut être formé par une droite, ou une courbe convexe dont le centre peut être situé sur le cercle primitif.

Selon une autre particularité complémentaire, le fond de l'intervalle entre deux dents comprend une échancrure concave qui, avantageusement se raccorde au bord convexe antérieur de la dent suivante.

Par ailleurs, le sommet des dents se raccorde aux faces diamétrales par des chanfreins formant avec ladite face, des angles, tandis que ledit sommet est situé latéralement par rapport au plan médian diamétral.

D'autres caractéristiques et avantages ressortiront de la description qui suit en référence aux dessins schématiques annexés représentant, à titre d'exemple non limitatif, une forme d'exécution d'un pignon.

Les figures 1 à 3 illustrent un mode de réalisation préféré de l'invention.

La figure 1 est une vue de côté en élévation d'un pignon en cours d'engrènement avec un tronçon de chaîne représenté en traits fins.

La figure 2 est une vue partielle de côté en élévation montrant à échelle agrandie la denture du pignon.

La figure 3 est une vue de côté en coupe transversale d'une dent.

La figure 4 est une vue partielle similaire à la figure 2, montrant une variante de réalisation.

De façon connue, le pignon denté (1) est réalisé par emboutissage et usinage d'une tôle métallique et comporte un alésage central (2) permettant son calage en rotation, par des moyens non représentés, sur le corps de la roue libre, une joue (3) et des dents radiales (4).

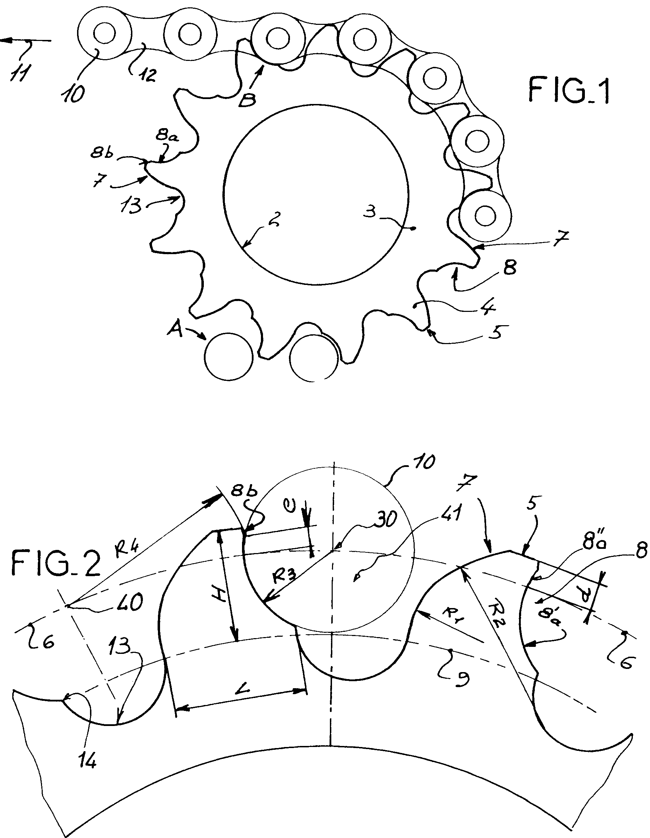

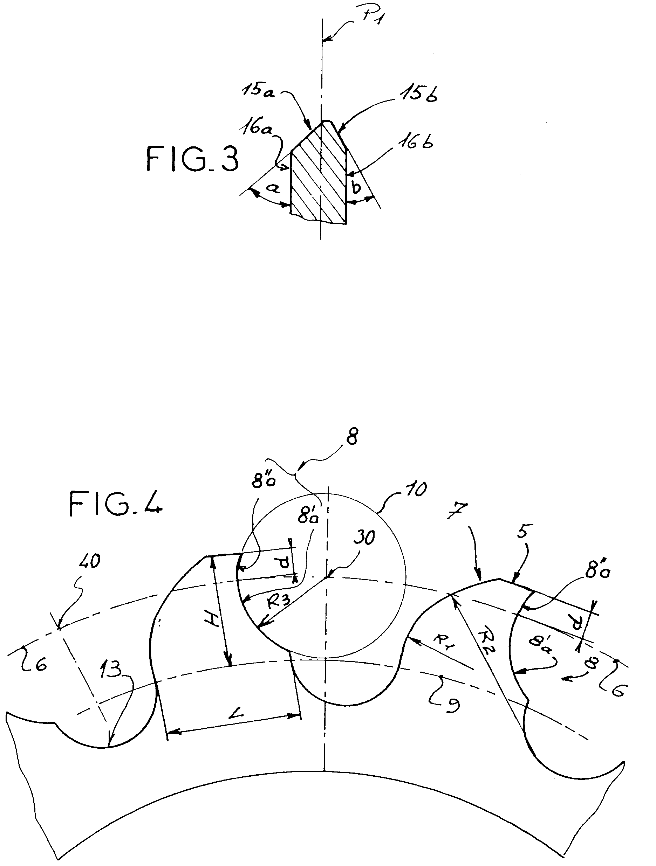

Le pignon (1) comprend une succession de dents radiales (4), chacune de celles-ci étant limitée verticalement par un bord antérieur (7) et un bord postérieur (8), ce dernier étant destiné à coopérer activement et à engrener avec les rouleaux (10) de maillons (12) de la chaîne correspondante. Selon l'invention, le bord postérieur (8) est formé par une courbure concave (8a) s'étendant de part et d'autre du cercle primitif (6). Ainsi, la courbure concave (8a) comprend une zone (8′a) s'étendant sous ledit cercle primitif (6) et une zone (8˝a) s'étendant vers l'extérieur au-dessus et au-delà dudit cercle primitif (6). Ainsi constitué, le bord postérieur (8) forme un crochet de retenue pour le rouleau (10) de chaîne. Le profil concave (8a) est avantageusement une portion de cercle dont le rayon (R3) est de valeur égale au rayon du rouleau (10) de chacun des maillons (12) de la chaîne. Par ailleurs, le centre (30) du rayon de courbure est avantageusement situé sur le rayon primitif (6). Comme le montre bien la figure 2, cette partie concave va du pied de la dent défini par le cercle de pied (9) jusqu'au-delà du cercle primitif comme montré par la distance (e), de manière à former un crochet retenant mieux le rouleau (10). Au-delà de la partie concave (8a), le bord postérieur (8) de la dent (4) est relié au sommet (5) de celle-ci par un chanfrein (8b) qui est avantageusement un profil courbe convexe, de rayon (R4). Le centre (40) du rayon de courbure étant par exemple situé sur le cercle primitif (6) et disposé sensiblement au milieu de l'intervalle (41) entre dents précédent. A noter que le sommet (5) de la dent se trouve à une distance (d) du cercle primitif, tandis que la partie concave (8a) s'étend au-delà du cercle primitif sur une distance (e) qui, selon le mode de réalisation des figures 1 et 2, est telle que la distance (e) est sensiblement égale à la moitié de la distance (d). Bien entendu, il pourrait en être autrement, et la zone concave (8˝a) pourrait s'étendre jusqu'au sommet (5) de la dent, comme cela est représenté à la figure 4. En outre, chaque dent présente un bord antérieur (7) convexe dont la courbure est avantageusement une succession de profils circulaires dont les rayons successifs (R1) et (R2) vont en croissant depuis leur base jusqu'à leur sommet.

La figure 2 montre que, grâce à la forme particulière des bords, respectivement antérieur (7) et postérieur (8), chaque dent (4) a une largeur de pied (L) supérieure à la hauteur (H). Le fait que la base de la dent ait une largeur supérieure à la hauteur de celle-ci lui donne une grande résistance mécanique.

Grâce à cet agencement, lorsque l'axe (10) d'un maillon (12) de chaîne tirée dans le sens de la flèche (11) de la figue 1, parvient dans l'intervalle entre deux des dents de pignon, comme montré en "A" à la figure 1, il ne vient pas en contact avec le bord antérieur (7) de la dent suivante, ce qui réduit les pertes par frottement, mais par contre vient naturellement se loger dans la partie concave (8a) de la dent précédente. Grâce à son enveloppement par cette partie formant crochet, l'axe (10) ne tend pas à ripper radialement, ne communique qu'un effort normal à cette dent à l'exclusion de tout effort vers l'extérieur et transmet donc une plus grande partie de l'effort qui lui est communiqué par la chaîne entraînée par le pédalier. Il en résulte que le rendement général de la transmission est amélioré.

En fin de course, et lorsque le rouleau (10) arrive à la position "B" représentée à la figure 1, son rouleau (10) se dégage aisément de la partie en forme de crochet grâce à la partie convexe (2b) qui s'efface devant lui en même temps que la dent (4) correspondante pivote en descendant.

Il faut noter ici que ce dégagement s'effectue d'autant mieux que la dent dépasse peu du cercle primitif de la denture.

Suivant une forme d'exécution de l'invention, une échancrure concave (13) est ménagée dans l'intervalle entre chaque dent au-dessous du cercle de pied (9) des dents. Cette échancrure concave (13) se raccorde au profil convexe du bord antérieur (7) de la dent suivante et est séparée du profil concave de la dent précédente par une arête (14). Ladite échancrure (13) permettant aux rouleaux de chaîne (10) de descendre la cavité formée par l'échancrure (13) en appui sur l'arête (14) et la courbure (7), déterminant ainsi la valeur du cercle primitif favorisant l'engagement de la chaîne sous le pignon. Comme cela est représenté à titre d'exemple, l'échancrure (13) a une forme circulaire, mais il pourrait en être autrement, et elle pourrait être de toute autre forme et notamment carrée, rectangulaire, triangulaire ou trapézoïdale. De plus, ces échancrures sont destinées à permettre l'évacuation des boues collectées par les rayons et déposées sur le pignon lors de l'introduction des dents dans l'intervalle entre maillons, évitant ainsi que la boue s'accumule dans les intervalles entre dents, perturbe la transmission et parvienne même à faire dévier la chaîne de sa trajectoire en entraînant son déraillement du pignon.

Selon une disposition particulière des dents (4) des pignons selon l'invention, celles-ci comprennent en leur partie supérieure, des chanfreins latéraux (15a, 15b) reliant le sommet (5) de denture (4) aux faces diamétrales (16a, 16b). Ces chanfreins permettent le glissement transversal de la chaîne et un meilleur engagement lors d'un déraillement. De façon avantageuse, les chanfreins (15a, 15b) forment par rapport aux faces diamétrales (16a, 16b) du pignon, des angles (a) et (b) de valeurs différentes et son disposés de manière dissymétrique par rapport au plan médian diamétral (P1) du pignon. Dans la forme d'exécution représentée, l'angle (a) a une valeur de 45°, tandis que l'autre (b) a une valeur de 30°. Au montage sur le corps de roue libre, le pignon est disposé de manière que le chanfrein (15b) le plus pentu et le moins large soit tourné vers l'extérieur de la roue afin de faciliter le déplacement de la chaîne lors de l'actionnement du dérailleur.

La figure 4 illustre une variante de dents, selon laquelle le bord postérieur (8a) ne comprend pas de chanfrein reliant la partie concave supérieure (8˝a) au sommet (5) de la dent. Selon cette variante, la portion concave (8˝a) située au-dessus du cercle primitif (6) s'étend sur la distance (d) jusqu'au sommet (5).

Il va de soi que l'on ne sortirait pas du cadre de l'invention si le chanfrein (8b) était rectiligne et formé par un petit segment de droite. De même, le bord antérieur (7) pourrait avoir une courbure quelconque et notamment formé par une seule portion de cercle.

Il ressort de ce qui précède que grâce à sa denture en forme de crochet, et de manière générale à la forme générale de ses dents, ce pignon permet d'obtenir un excellent accrochage des maillons améliorant le rendement et évitant tout glissement générateur d'usure. Par ailleurs, la forme en crochet de chaque dent combinée avec une réduction du diamètre primitif réel par rapport au diamètre primitif théorique, permet de réduire le nombre de dents en prise.

Notons par ailleurs que chaque dent d'un pignon peut être conforme à celle selon l'invention. Mais il va de soi qu'une dent sur deux ou qu'une dent sur trois pourrait l'être, tandis que les autres dents auraient une forme traditionnelle.

Bien entendu, l'invention qui a été décrite ci-dessus dans le cas de son application à un pignon, peut aussi être appliquée à toute roue dentée, et en particulier aux plateaux de pédalier.

## Revendications

1. Pignon denté pour transmission par chaîne qui comprend une succession de dents (4) limitées radialement par un bord antérieur (7) et un bord postérieur (8) destinés à venir s'appuyer sur les rouleaux correspondants (10) de maillons de la chaîne (12), caractérisé en ce que le bord antérieur (8) est formé par une courbure concave (8a) s'étendant de part et d'autre du cercle primitif (6) pour s'étendre vers l'extérieur au-delà de celui-ci, formant ainsi un crochet de retenue.

2. Pignon denté selon la revendication 1, caractérisé en ce que la courbure concave (8a) est une portion de cercle de rayon (R3).

3. Pignon denté selon la revendication 2, caractérisé en ce que le centre (30) du rayon (R3) de la courbure concave (8a) est situé sur le cercle primitif (6).

4. Pignon denté selon la revendication 3, caractérisé en ce que le rayon (R3) est égal au rayon des rouleaux (10) des maillons de chaîne.

5. Pignon denté selon l'une quelconque des revendications précédentes, caractérisé en ce que le bord antérieur (7) est formé par une courbure convexe.

6. Pignon denté selon l'une quelconque des revendications précédentes, caractérisé en ce que la base de la dent (4) a une largeur (L) de valeur supérieure à sa hauteur (H).

7. Pignon denté selon l'une quelconque des revendications précédentes, caractérisé en ce que le bord postérieur concave (8a) est relié au sommet (5) de la dent (4) par un chanfrein (8b).

8. Pignon denté selon la revendication 7, caractérisé en ce que le chanfrein (8b) est formé par une courbure convexe.

9. Pignon denté selon la revendication 8, caractérisé en ce que la courbure convexe du chanfrein (8b) est une portion de cercle dont le centre est situé sur le cercle primitif (6).

10. Pignon denté selon l'une quelconque des revendications précédentes, caractérisé en ce qu'il comporte dans le fond de l'intervalle entre deux dents, une échancrure concave (13).

11. Pignon denté selon la revendication 10, caractérisé en ce que l'échancrure concave (13) se raccorde au bord convexe antérieur (7) de la dent suivante.

12. Pignon denté selon l'une quelconque des revendications précédentes, caractérisé en ce que le sommet (5) des dents se raccorde aux faces diamétrales (16a, 16b) par des chanfreins respectifs (15a, 15b) formant avec ladite face, des angles (a, b).

13. Pignon denté selon la revendication 12, caractérisé en ce que le sommet (5) est situé latéralement par rapport au plan médian diamétral (P1).

14. Pignon denté selon la revendication 12 ou 13, caractérisé en ce que les angles (a, b) ont des valeurs différentes.
